# EUROPÄISCHE PATENTSCHRIFT

(11) **EP 1 563 969 B1**
(45) Veröffentlichungstag und Bekanntmachung des Hinweises auf die Patenterteilung: **07.03.2007**
(21) Anmeldenummer: 04003215.3
(22) Anmeldetag: 13.02.2004
(51) Int. Cl.: B27C 5/10, B23Q 11/00

(54) **Staubabsaugvorrichtung einer Oberfräse**
Dust collector for a router
Dispositif d'aspiration des poussières pour une toupie

(43) Veröffentlichungstag der Anmeldung: 17.08.2005
(73) Patentinhaber: Festool GmbH, 73240 Wendlingen (DE)
(72) Erfinder: STEIMEL, Johannes, Dr., 73272 Neidlingen (DE); MANZ, Bernhard, Dipl.-Ing., 70771 Leinfelden (DE); STARK, Markus, Dipl.-Ing., 73272 Neidlingen (DE); HOLTZ, Arne, Dipl.-Ing., 71686 Remseck (DE)
(74) Vertreter: Reimold, Otto

(56) Entgegenhaltungen:
- DE-A- 10 223 893
- DE-U- 8 609 919
- DE-U- 20 216 066
- US-A- 5 993 124
- US-A1- 2002 182 023

## Beschreibung

Die Erfindung betrifft eine Staubabsaugvorrichtung einer Oberfräse, wobei die Oberfräse eine auf das zu fräsende Werkstück aufzulegende Auflageplatte mit einer Durchtrittsöffnung für den Durchtritt eines Fräswerkzeugs aufweist, das mit der Abtriebswelle eines oberhalb der Auflageplatte höhenverstellbar angeordneten Antriebsaggregats der Oberfräse verbindbar und zu einer Rotationsbewegung antreibbar ist, mit einem lösbar mit der Auflageplatte verbindbaren Staubfangteil, das in seiner Gebrauchslage unterhalb der Auflageplatte seitlich vom Fräswerkzeug angeordnet und zum Fräswerkzeug hin offen ist und um die Rotationsachse verdreht werden kann, sodass beim Betrieb der in das Staubfangteil eintretende Frässtaub oder dergleichen zu einer Absaug-Anschlusseinrichtung gesaugt wird.

Bei einer aus der deutschen Gebrauchsmusterschrift 202 16 066.1 hervorgehenden Staubabsaugvorrichtung weist das Staubfangteil eine trichterförmige Gestalt auf und ist mit einem die Auflageplatte umschließenden Ringkanal so verbunden, dass das Staubfangteil dem Ringkanal entlang und somit um das Fräswerkzeug herum bewegt werden kann. Der Frässtaub oder dergleichen gelangt in jeder Drehstellung des Staubfangteils in den Ringkanal, der die Anschlusseinrichtung für den Saugschlauch trägt.

Das trichterförmige Staubfangteil ist verhältnismäßig weit vom Fräswerkzeug entfernt. Ferner ist seine dem Fräswerkzeug zugewandte Öffnung verhältnismäßig kleinflächig. Dementsprechend gelangt bei der Werkstückbearbeitung verhältnismäßig viel Frässtaub oder dergleichen am Staubfangteil vorbei in die Umgebung.

Die bekannte Staubabsaugvorrichtung ist des Weiteren verhältnismäßig platzaufwendig und kostenintensiv.

Der vorliegenden Erfindung liegt daher die Aufgabe zu Grunde, eine hinsichtlich der Staubabsaugung möglichst effektive Staubabsaugvorrichtung zu schaffen, die verhältnismäßig wenig Platz beansprucht und einen möglichst einfachen Aufbau aufweist.

Diese Aufgabe wird erfindungsgemäß dadurch gelöst, dass das Staubfangteil von einer Absaughaube mit einem in der Gebrauchslage zur Rotationsachse zumindest im Wesentlichen konzentrischen Haubenmantel und einem in Gebrauchslage der Auflageplatte abgewandten Haubenboden gebildet wird, wobei sich der Haubenmantel und der Haubenboden in Umfangsrichtung über einen Winkel von gleich oder kleiner als 180° erstrecken, dass die Absaughaube an ihrer Oberseite offen ist und in der Gebrauchslage in die Durchtrittsöffnung mündet, dass der obere Endbereich der Absaughaube an einem Haltering verdrehbar gelagert ist, der an der Auflageplatte lösbar befestigbar ist und in Gebrauchslage um die Durchtrittsöffnung herum verläuft, dass der Oberseite der Durchtrittsöffnung eine lösbar mit der Auflageplatte verbindbare und in der Gebrauchslage die Durchtrittsöffnung überdeckende Abdeckeinrichtung zugeordnet ist, die eine Durchgangsöffnung für das Fräswerkzeug enthält, und dass die Anschlusseinrichtung in Gebrauchslage in offener Verbindung mit der Durchtrittsöffnung steht.

Auf diese Weise erfolgt die Staubabsaugung durch die zentrale Durchtrittsöffnung der Auflageplatte, sodass - sieht man gegebenenfalls von der Anschlusseinrichtung ab - eine platzsparende Anordnung ohne in radialer Richtung über die Auflageplatte vorstehende Teile möglich ist. Die oberseitige Abdeckeinrichtung verhindert einen Austritt des Frässtaubes oder dergleichen nach oben, sodass der Frässtaub oder dergleichen sicher zur Anschlusseinrichtung und von dort in den Saugschlauch gelangt. Es handelt sich hier um einfache und kostengünstig herstellbare Teile.

Zweckmäßige Ausgestaltungen der Erfindung sind in den Unteransprüchen angegeben.

Nachstehend wird ein Ausführungsbeispiel der Erfindung anhand der Zeichnung beschrieben. Es zeigen:
- Figur 1: den Bereich der Auflageplatte einer Oberfräse mit angebauter Staubabsaugvorrichtung beim Fräsen eines Werkstücks im Schnitt gemäß der Schnittlinie I-I in Figur 2,
- Figur 2: die Anordnung nach Figur in Seitenansicht von links her gesehen,
- Figur 3: die Anordnung nach den Figuren 1 und 2 ohne das Werkstück in Schrägansicht von unten,
- Figur 4: eine der Figur 3 entsprechende Schrägansicht von unten zusammen mit einem zu fräsenden Werkstück,

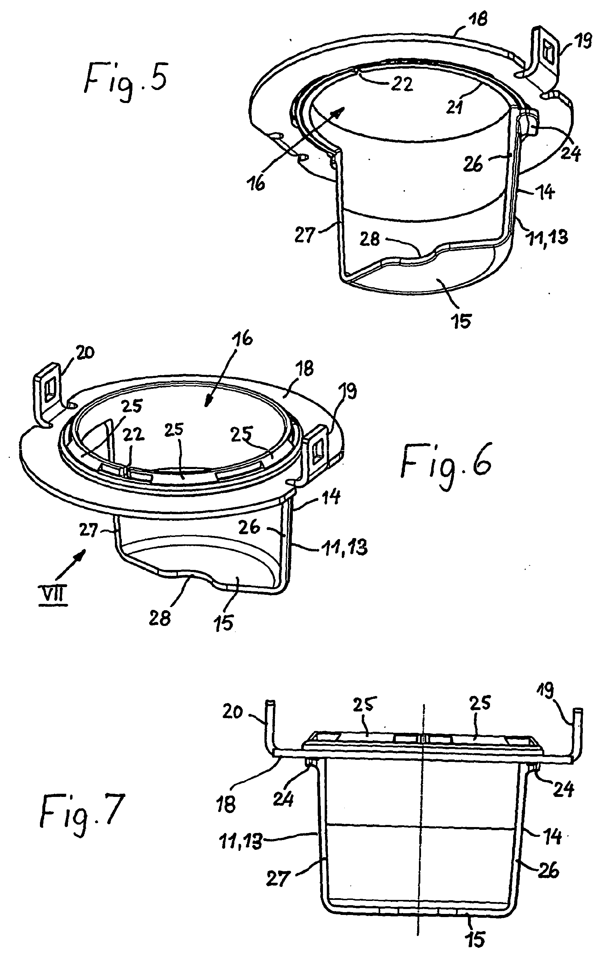

- Figur 5: die Staubabsaughaube mit zugehörigem Haltering in gesonderter Darstellung in Schrägansicht von unten,
- Figur 6: die Anordnung nach Figur 5 in Schrägansicht von oben,
- Figur 7: die Anordnung nach den Figuren 5 und 6 in Seitenansicht gemäß Pfeil VII in den Figuren 6 und 8,
- Figur 8: die Anordnung nach den Figuren 5 bis 7 in Draufsicht von oben,
- Figur 9: die Anordnung nach den Figuren 5 bis 8 in Seitenansicht gemäß Pfeil IX in Figur 8 und
- Figur 10: wiederum die gleiche Anordnung im zur Seitenansicht der Figur 9 parallelen Schnitt gemäß der Schnittlinie X-X in Figur 8.

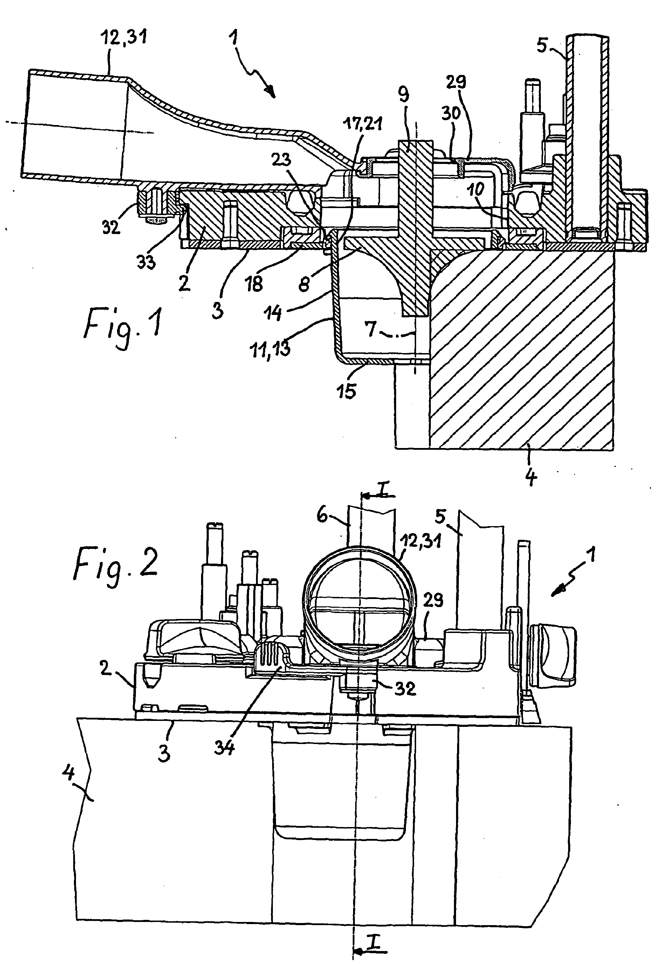

Eine Oberfräse weist eine Tischeinheit 1 mit einer Auflageplatte 2 auf, die mit ihrer Unterseite 3 auf ein zu fräsendes Werkstück 4 aufgesetzt wird. Von der Auflageplatte 2 stehen mit Abstand zueinander zwei Lagersäulen 5, 6 nach oben hin ab, an denen ein nicht dargestelltes Antriebsaggregat gelagert ist, das den Lagersäulen 5, 6 entlang verstellt werden kann. Das Antriebsaggregat enthält einen Antriebsmotor, ein Getriebe und eine Einspannvorrichtung für ein sich in axialer Richtung 7 (diese verläuft parallel zu den Lagersäulen 5, 6) erstreckendes Fräswerkzeug 8, das mit seinem Fräserschaft 9 in die Einspannvorrichtung eingespannt und auf diese Weise mit der Abtriebswelle des Antriebsaggregats verbunden wird, so dass das Fräswerkzeug 8 beim Betrieb eine Rotationsbewegung um die axiale Richtung 7 ausführt. Das Fräswerkzeug 8 ist in Figur 1 ohne die Einspannvorrichtung des Antriebsaggregats dargestellt. Das Fräswerkzeug 8 durchsetzt eine zentrale Durchtrittsöffnung 10 der Auflageplatte 2 und kann durch Verschieben des Antriebsaggregats entlang den Lagersäulen 5, 6 in eine unten vor die Auflageplatte 2 vorstehende Lage gebracht werden, in der es bei auf ein Werkstück 4 aufgesetzter Oberfräse am Werkstück 4 angreift. Bewegt man die Oberfräse über das Werkstück 4, wird dies dem Bewegungsweg entsprechend bearbeitet.

Das beim Fräsen entstehende Abtragsmaterial, nachstehend Frässtaub genannt, wird zur Vermeidung einer Verschmutzung der Umgebung abgesaugt. Hierzu dient eine Staubabsaugvorrichtung, zu der ein Staubfangteil 11 gehört, das lösbar mit der Auflageplatte 2 verbindbar ist. Das Staubfangteil 11 ist in seiner in den Figuren 1 bis 4 dargestellten Gebrauchslage unterhalb der Auflageplatte 2 seitlich vom Fräswerkzeug 8 angeordnet und ist an seiner dem Fräswerkzeug 8 zugewandten Seite offen. Der beim Fräsen entstehende Frässtaub wird beim Betrieb in dem Staubfangteil 11 gefangen und von dort zu einer Absaug-Anschlusseinrichtung 12 gesaugt, an die ein zu einem Staubsauger führender Saugschlauch angeschlossen werden kann.

Das Staubfangteil 11 wird von einer Absaughaube 13 gebildet, die einen in der Gebrauchslage zur Rotationsachse 7 zumindest im Wesentlichen konzentrischen Haubenmantel 14 und einen in Gebrauchslage der Auflageplatte 2 abgewandten Haubenboden 15 aufweist. Die Absaughaube 13 steht in ihrer Gebrauchslage von der Auflageplatte 2 aus nach unten hin ab. Der Haubenmantel 14 und der Haubenboden 15 erstrecken sich in Umfangsrichtung über einen Winkel von gleich oder kleiner als 180°, zweckmäßigerweise über einen Winkel im Bereich von etwa 130° bis 160°, insbesondere im Bereich zwischen 140° und 150°. Im dargestellten Falle beträgt der in Umfangsrichtung gemessene Erstreckungswinkel α etwa 145°. Die Absaughaube 13 umschließt das Fräswerkzeug 8 also nur über einen Teil von dessen Umfang, sodass das Fräswerkzeug 8 mit seinem nicht von der Absaughaube 13 umschlossenen Bereich am Werkstück 4 angreifen kann.

Die Absaughaube 13 ist an ihrer Oberseite 16 offen und dabei in der Gebrauchslage so angeordnet, dass sie in die Durchtrittsöffnung 10 mündet, d.h. das Innere der Absaughaube 3 schließt sich nach unten hin an die Durchtrittsöffnung 10 an.

Die Absaughaube 13 ist um die Rotationsachse 7 verdrehbar. Hierzu ist der obere Endbereich 17 der Absaughaube 13 an einem Haltering 18 verdrehbar gelagert, der an der Auflageplatte 2 lösbar befestigt wird, wobei zweckmäßigerweise vorgesehen ist, dass der Haltering 18 im befestigten Zustand an der Unterseite 3 der Auflageplatte 2 angeordnet ist. Der im befestigten Zustand drehfest an der Auflageplatte 2 angeordnete Haltering kann mit der Auflageplatte 2 beispielsweise lösbar verrastet sein. Hierzu stehen beim Ausführungsbeispiel vom Haltering 18 zwei Haltelaschen 19, 20 nach oben hin ab, die in die an diesen Stellen entsprechend ausgebildete Auflegeplatte 2 eingesteckt werden und dort verrasten. Das Entrasten kann von Hand erfolgen, beispielsweise indem man gegen entsprechende Betätigungsstücke drückt.

Es kann sich um die gleiche Rastverbindung handeln, wie sie in der DE 102 23 893 A1 für einen Kopierring beschrieben ist.

Die Absaughaube 13 weist an ihrem oberen Endbereich 17 zweckmäßigerweise eine in Umfangsrichtung umlaufende Halspartie 21 auf, mit der die Absaughaube 13 verdrehbar am Haltering 18 gelagert ist. Dabei kann die Halspartie 21 zu Montagezwecken geschlitzt sein (Schlitz 22), sodass sich die Halspartie 21 etwas zusammendrücken lässt. Eine leichtgängige Verdrehbarkeit wird mittels eines Lagerrings 23 erreicht, der zwischen der Halspartie 21 der Absaughaube 13 und dem Haltering 18 angeordnet ist.

Die Absaughaube 13 weist oben von ihrem Haubenmantel 14 nach außen hin abstehende Anschlagvorsprünge 24 auf, die von unten her am Lagerring und am Haltering 18 anliegen. Ferner sind an der Oberseite der Halspartie 21 mehrere über den Umfang verteilt angeordnete Rastnasen 25 vorhanden, die nach außen hin abstehen und im montierten Zustand den Lagerring 24 übergreifen. An Stelle der verteilt angeordneten Rastnasen 25 könnte auch eine umlaufende Rastnase vorhanden sein.

Bei der Montage steckt man die Halspartie 21 durch den Haltering 18, dabei wird die Halspartie 21 etwas zusammengedrückt, bis die Rastnasen 25 hindurchgesteckt sind. Die Halspartie 21 federt dann wieder auf, sodass die Rastnasen 25 den Haltering 18 übergreifen, der seinerseits den Haltering 18 stufenartig übergreift.

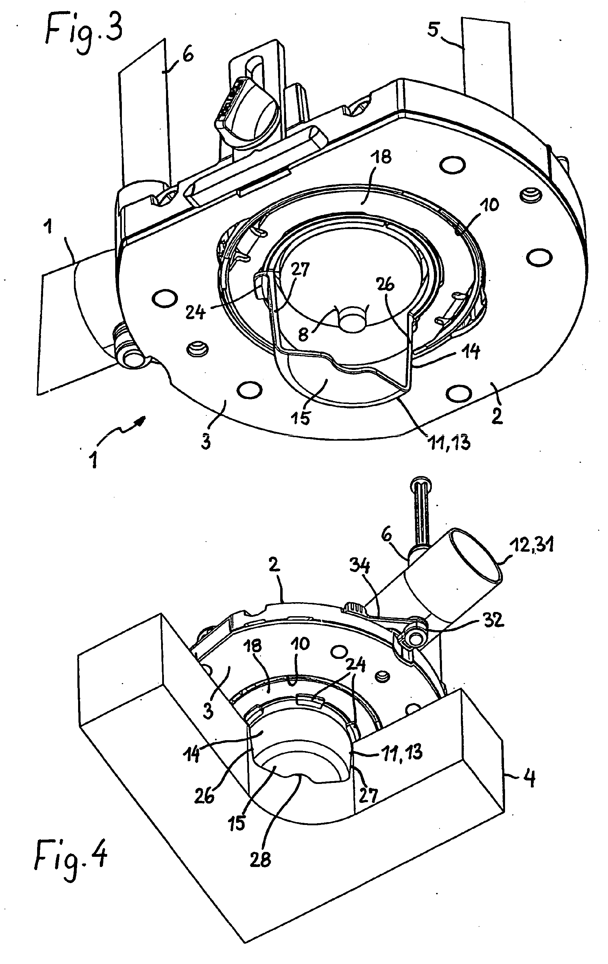

Ist der Haltering 18 zusammen mit der Absaughaube 13 an der Unterseite der Auflageplatte 2 um die Durchtrittsöffnung 10 herum befestigt, lässt sich die Absaughaube 13 um das Fräswerkzeug 8 herum verdrehen. Dies ergibt, dass sich die Drehlage der Absaughaube beim Fräsen selbsttätig an den Verlauf der zu fräsenden Werkstückfläche anpasst. Wie bereits erwähnt, können sich der Haubenmantel 14 und der Haubenboden 15, wie beim dargestellten Ausführungsbeispiel, über einen kleineren Winkel als 180° erstrecken. Dies ist insbesondere dann von Vorteil, wenn ein Inneneck am Werkstück bearbeitet werden soll (siehe Figur 4). Der Radius des Innenecks muss größer sein als ein Mindestradius, der von dem Winkel abhängt, über den sich der Haubenmantel 14 und der Haubenboden 15 in Umfangsrichtung erstrecken. Je kleiner dieser Winkel ist, desto kleinere Inneneckradien können am Werkstück gefräst werden.

Das selbsttätige Verdrehen der Absaughaube 13 wird dadurch bewirkt, dass der in Bewegungsrichtung der Oberfräse vordere Rand 26, 27 des Haubenmantels 14 an der zu fräsenden Werkstückfläche zur Anlage gelangt.

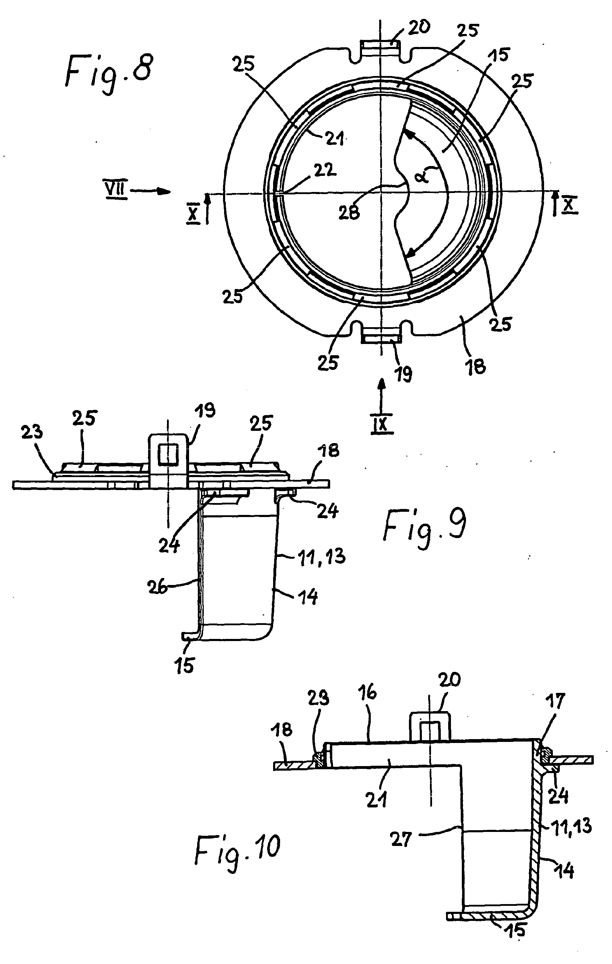

Der Haubenboden 15 weist, wie insbesondere aus Figur 8 ersichtlich ist, zweckmäßigerweise eine kreissektorenähnliche Gestalt mit einer zentralen Einbauchung 28 auf. Die Kontur dieser Einbauchung 28 ist zweckmäßigerweise kreisbogenförmig. Diese Einbauchung 28 ist für den Fall vorgesehen, dass am Fräswerkzeug 8 ein Anlaufkugellager befestigt ist. Durch die Einbauchung 28 des Haubenbodens 15 wird Platz geschaffen für das Befestigungsmittel, mit dem das Anlaufkugellager am Fräswerkzeug 8 befestigt werden kann.

Der Frässtaub wird, wie bereits erwähnt, durch die Durchtrittsöffnung 10 der Auflageplatte 2 zur Anschlusseinrichtung 12 gesaugt. Dieser Strömungsweg sollte nach außen hin abgeschlossen sein. Daher ist der Oberseite der Durchtrittsöffnung 10 eine Abdeckeinrichtung 29 zugeordnet, die lösbar mit der Auflageplatte 2 verbunden wird und in der Gebrauchslage die Durchtrittsöffnung 10 überdeckt. Die Abdeckeinrichtung 29 kann hauben- oder deckelartige Gestalt aufweisen. Sie enthält eine Durchgangsöffnung 30 für den Durchtritt des Fräswerkzeugs 8 und dabei von dessen Schaft 9.

Die Anschlusseinrichtung 12, die beim Ausführungsbeispiel von einem Anschlussstutzen 31 gebildet wird, kann ebenfalls lösbar mit der Auflageplatte 2 verbunden werden. Dabei ist die Anschlusseinrichtung 12 in der Gebrauchslage zweckmäßigerweise an der Oberseite der Auflageplatte 2 angeordnet. Dabei ist die Anschlusseinrichtung 12 zweckmäßigerweise fest oder lösbar mit der Abdeckeinrichtung 29 verbunden.

Auf diese Weise kann man bei Nichtgebrauch die Abdeckeinrichtung 29 zusammen mit der Anschlusseinrichtung 12 wegnehmen.

Das Festlegen der Abdeckeinrichtung 29 mit der Anschlusseinrichtung 12 kann beispielsweise durch Verhaken und Verrasten erfolgen. Hierzu kann an der Unterseite der Anschlusseinrichtung 12 ein drehbar gelagertes Drehglied 32 angeordnet sein, das durch Betätigen eines Hebelglieds 34 verdreht wird und einen Rastvorsprung 33 aufweist, der im mit der Auflageplatte 2 verbundenen Zustand die Auflageplatte untergreift (siehe insbesondere Figur 1).

## Patentansprüche

1. Staubabsaugvorrichtung einer Oberfräse, wobei die Oberfräse eine auf das zu fräsende Werkstück (4) aufzulegende Auflageplatte (2) mit einer Durchtrittsöffnung (10) für den Durchtritt eines Fräswerkzeugs (8) aufweist, das mit der Abtriebswelle eines oberhalb der Auflageplatte höhenverstellbar angeordneten Antriebsaggregats der Oberfräse verbindbar und zu einer Rotationsbewegung antreibbar ist, mit einem lösbar mit der Auflageplatte verbindbaren Staubfangteil (11), das in seiner Gebrauchslage unterhalb der Auflageplatte (2) seitlich vom Fräswerkzeug angeordnet und zum Fräswerkzeug hin offen ist und um die Rotationsachse (7) verdreht werden kann, sodass beim Betrieb der in das Staubfangteil eintretende Frässtaub oder dergleichen zu einer Absaug-Anschlusseinrichtung gesaugt wird, **dadurch gekennzeichnet, dass** das Staubfangteil (11) von einer Absaughaube (13) mit einem in der Gebrauchslage zur Rotationsachse (7) zumindest im Wesentlichen konzentrischen Haubenmantel (14) und einem in Gebrauchslage der Auflageplatte (2) abgewandten Haubenboden (15) gebildet wird, wobei sich der Haubenmantel (14) und der Haubenboden (15) in Umfangsrichtung über einen Winkel von gleich oder kleiner als 180° erstrekken, dass die Absaughaube (13) an ihrer Oberseite offen ist und in der Gebrauchslage in die Durchtrittsöffnung (10) mündet, dass der obere Endbereich (17) der Absaughaube (13) an einem Haltering (18) verdrehbar gelagert ist, der an der Auflageplatte (2) lösbar befestigbar ist und in Gebrauchslage um die Durchtrittsöffnung (10) herum verläuft, dass der Oberseite der Durchtrittsöffnung eine lösbar mit der Auflageplatte (2) verbindbare und in der Gebrauchslage die Durchtrittsöffnung (10) überdeckende Abdeckeinrichtung(29) zugeordnet ist, die eine Durchgangsöffnung (30) für das Fräswerkzeug (8) enthält, und dass die Anschlusseinrichtung (12) in Gebrauchslage in offener Verbindung mit der Durchtrittsöffnung (10) steht.

2. Staubabsaugvorrichtung nach Anspruch 1, **dadurch gekennzeichnet, dass** sich der Haubenmantel (14) und der Haubenboden (15) in Umfangsrichtung über einen Winkel im Bereich von etwa 130° bis 160°, zweckmäßigerweise im Bereich zwischen 140° und 150°, erstrecken.

3. Staubabsaugvorrichtung nach Anspruch 1 oder 2, **dadurch gekennzeichnet, dass** der Haubenboden (15) eine kreissektorenähnliche Gestalt mit einer zentralen Einbauchung (28) aufweist.

4. Staubabsaugvorrichtung nach einem der Ansprüche 1 bis 3, **dadurch gekennzeichnet, dass** die Absaughaube (13) an ihrem oberen Endbereich (17) eine umlaufende, zweckmäßigerweise geschlitzte Halspartie (21) bildet, mit der die Absaughaube (13) verdrehbar am Haltering (18) gelagert ist.

5. Staubabsaugvorrichtung nach einem der Ansprüche 1 bis 4, **dadurch gekennzeichnet, dass** der Haltering (18) im befestigten Zustand an der Unterseite der Auflageplatte (2) angeordnet ist.

6. Staubabsaugvorrichtung nach einem der Ansprüche 1 bis 5, **dadurch gekennzeichnet, dass** die Anschlusseinrichtung (12) lösbar mit der Auflageplatte (2) verbindbar ist.

7. Staubabsaugvorrichtung nach Anspruch 6, **dadurch gekennzeichnet, dass** die Anschlusseinrichtung (12) in Gebrauchslage an der Oberseite der Auflageplatte (2) angeordnet ist.

8. Staubabsaugvorrichtung nach Anspruch 7, **dadurch gekennzeichnet, dass** die Anschlusseinrichtung (12) fest oder lösbar mit der Abdeckeinrichtung (29) verbunden ist.

9. Staubabsaugvorrichtung nach einem der Ansprüche 1 bis 8, **dadurch gekennzeichnet, dass** die Anschlusseinrichtung (12) einen Anschlussstutzen (31) aufweist.

## Claims

1. Dust extraction device for a routing cutter, the routing cutter incorporating a base plate (2) to be placed on the component (4) to be cut and featuring a passage (10) for a cutting tool (8) which can be connected to the drive shaft of a drive assembly of the routing cutter, which is vertically adjustable above the base plate, and can be driven to perform a rotary movement, with a dust collecting part (11) capable of releasable connection to the base plate, which, in its position of use, is located below the base plate (2) at the side of the cutting tool, is open towards the cutting tool and can be rotated about the axis of rotation (7), so that the cutting dust or similar material entering the dust collecting part in operation is drawn towards an extraction connecting device, **characterised in that** the dust collecting part (11) consists of an extraction hood (13) with a hood shell (14) which is at least substantially concentric with the axis of rotation (7) in the position of use and of a hood base (15) remote from the base plate (2) in the position of use, the hood shell (14) and the hood base (15) extending over an angle equal to or smaller than 180° in the circumferential direction, **in that** the extraction hood (13) is open at the top and terminates in the passage (10) in the position of use, **in that** the upper end area (17) of the extraction hood (13) is rotatably mounted on a retaining ring (18) which can be releasably joined to the base plate (2) and runs around the passage (10) in the position of use, **in that** a covering device (29) which can be releasably joined to the base plate (2) to cover the passage (10) and which has a through opening (30) for the cutting tool (8) is assigned to the top of the passage, and **in that** the connecting device (12) is in open connection to the passage (10) in the position of use.

2. Dust extraction device according to claim 1, **characterised in that** the hood shell (14) and the hood base (15) extend over an angle in the range of approximately 130° to 160°, expediently in the range between 140° and 150°.

3. Dust extraction device according to claim 1 or 2, **characterised in that** the hood base (15) resembles a circle sector with a central inward bulge (28).

4. Dust extraction device according to any of claims 1 to 3, **characterised in that** the extraction hood (13) forms a continuous, expediently slotted, neck section (21) in its upper end area (17), by way of which the extraction hood (13) is rotatably mounted on the retaining ring (18).

5. Dust extraction device according to any of claims 1 to 4, **characterised in that** the retaining ring (18) is located on the underside of the base plate (2) in the fitted state.

6. Dust extraction device according to any of claims 1 to 5, **characterised in that** the connecting device (12) can be releasably connected to the base plate (2).

7. Dust extraction device according to claim 6, **characterised in that** the connecting device (12) is located on the top of the base plate (2) in the position of use.

8. Dust extraction device according to claim 7, **characterised in that** the connecting device (12) is permanently or releasably connected to the covering device (29).

9. Dust extraction device according to any of claims 1 to 8, **characterised in that** the connecting device (12) incorporates a connector (31).

## Revendications

1. Dispositif d'aspiration de poussière pour une défonceuse, ladite défonceuse comportant une plaque d'appui (2), destinée à être posée sur la pièce à fraiser (4) et comportant une ouverture de passage (10) pour le passage d'un outil de fraisage (8), qui peut être relié à l'arbre de sortie d'un organe d'entraînement de la défonceuse, agencé de manière réglable en hauteur au-dessus de la plaque d'appui, et qui peut être entraîné dans un mouvement de rotation, ledit dispositif comportant un collecteur de poussière (11) qui peut être assemblé de manière amovible avec la plaque d'appui (2) et qui, dans sa position de service, est agencé en dessous de la plaque d'appui (2) latéralement à l'outil de fraisage et qui est ouvert vers l'outil de fraisage et peut tourner autour de l'axe de rotation (7), de telle sorte que, en cours de service, la poussière de fraisage ou similaire pénétrant dans le collecteur de poussière (11) est aspirée vers un dispositif d'aspiration/raccordement, **caractérisé en ce que** le collecteur de poussière (11) est formé par une hotte d'aspiration (13), qui comporte une enveloppe (14), au moins sensiblement concentrique à l'axe de rotation (7) dans la position de service, et un fond (15) opposé à la plaque d'appui (2) dans la position de service, l'enveloppe (14) et le fond (15) de la hotte s'étendant dans le sens périphérique en couvrant un angle inférieur ou égal à 180°, **en ce que** la hotte d'aspiration (13) est ouverte sur son côté supérieur et, dans la position de service, débouche dans l'ouverture de passage (10), **en ce que** la zone d'extrémité supérieure (17) de la hotte d'aspiration (13) est montée rotative sur une bague de fixation (18), qui peut être fixée de manière amovible sur la plaque d'appui (2) et qui, dans la position de service, entoure l'ouverture de passage (10), **en ce qu'**au côté supérieur de l'ouverture de passage (10) est associé un dispositif de recouvrement (29), qui peut être assemblé de manière amovible à la plaque d'appui (2) et, dans la position de service, recouvre l'ouverture de passage (10) et qui comporte un orifice débouchant (30) pour l'outil de fraisage (8), et **en ce que** le dispositif de raccordement (12), dans la position de service, est en liaison ouverte avec l'ouverture de passage (10).

2. Dispositif d'aspiration de poussière selon la revendication 1, **caractérisé en ce que** l'enveloppe (14) de la hotte et le fond (15) de la hotte s'étendent dans le sens périphérique en couvrant un angle dans le domaine de 130° à 160° environ, de manière judicieuse dans le domaine entre 140° et 150°

3. Dispositif d'aspiration de poussière selon la revendication 1 ou 2, **caractérisé en ce que** le fond (15) de la hotte a une forme similaire à un secteur de cercle avec un creux central (28).

4. Dispositif d'aspiration de poussière selon l'une quelconque des revendications 1 à 3, **caractérisé en ce que** la hotte d'aspiration (13), dans sa zone d'extrémité supérieure (17), forme une partie de collet (21) périphérique, de manière judicieuse fendue, par laquelle la hotte d'aspiration (13) est montée rotative sur la bague de fixation (18).

5. Dispositif d'aspiration de poussière selon l'une quelconque des revendications 1 à 4, **caractérisé en ce que** la bague de fixation (18), dans la position fixée, est agencée sur la face inférieure de la plaque d'appui (2).

6. Dispositif d'aspiration de poussière selon l'une quelconque des revendications 1 à 5, **caractérisé en ce que** le dispositif de raccordement (12) peut être assemblé de manière amovible à la plaque d'appui (2).

7. Dispositif d'aspiration de poussière selon la revendication 6, **caractérisé en ce que** le dispositif de raccordement (12), dans la position de service, est agencé sur la face supérieure de la plaque d'appui (2).

8. Dispositif d'aspiration de poussière selon la revendication 7, **caractérisé en ce que** le dispositif de raccordement (12) peut être assemblé de manière fixe ou amovible au dispositif de recouvrement (29).

9. Dispositif d'aspiration de poussière selon l'une quelconque des revendications 1 à 8, **caractérisé en ce que** le dispositif de raccordement (12) comporte une tubulure de raccordement (31).
